# EUROPÄISCHE PATENTSCHRIFT

(11) **EP 1 312 990 B1**
(45) Veröffentlichungstag und Bekanntmachung des Hinweises auf die Patenterteilung: **20.03.2019**
(21) Anmeldenummer: 02020761.9
(22) Anmeldetag: 16.09.2002
(51) Int. Cl.: G05B 19/042, G05B 19/406, G06F 17/30

(54) **Verfahren und Einrichtung zur Bereitstellung von Daten**
Method and device for preparing data
Procédé et dispositif de préparation de données

(30) Priorität: 28.09.2001 DE 10148160
(43) Veröffentlichungstag der Anmeldung: 21.05.2003
(73) Patentinhaber: Siemens Aktiengesellschaft, 80333 München (DE)
(72) Erfinder: Heinemann, Gerhard, Dr., 91058 Erlangen (DE)

(56) Entgegenhaltungen:
- WO-A-00/42522
- DE-C1- 4 020 358
- US-A- 4 613 269
- US-A- 5 572 102

## Beschreibung

Die Erfindung bezieht sich auf ein Verfahren und eine Einrichtung zur Bereitstellung von Daten von Werkzeugmaschinen, Produktionsmaschinen oder Robotern mit mindestens einer Bewegungssteuerung oder einer Antriebsregelung.

Im Stand der Technik ist es bekannt, Werkzeugmaschinen, Produktionsmaschinen oder Roboter mittels Bild- und/oder Tonaufnahmegeräten zusätzlich zu überwachen. So ist es beispielsweise aus den Patent Abstracts of Japan zur JP 2001-125612 A bekannt, Bild- und Audiodaten von Produktionseinrichtungen zu erfassen und jeweils mit einer Zeitinformation zu speichern. In einem weiteren, späteren Schritt werden diese Daten über ihre jeweilige Zeitinformation synchronisiert. Hierzu sind umfangreiche Speichermöglichkeiten notwendig, um eine nachträgliche Betrachtung bzw. Anhörung gewährleisten zu können.

Aus der US 5 572 102 A1 ist ein Verfahren zur Bereitstellung von Daten eines Schweißroboters mit einer Bewegungssteuerung bekannt. Bei diesem Verfahren werden auf die zu schweißende Schweißnaht im regulären Betrieb bezogene Bilddaten an die Bewegungssteuerung geliefert. Die gelieferten Daten werden von der Bewegungssteuerung zur Ermittlung der vorzunehmenden Bewegung verarbeitet.

Aufgabe der Erfindung ist es, die Bereitstellung von unterschiedlichen Daten von Werkzeugmaschinen, Produktionsmaschinen oder Robotern mit mindestens einer Bewegungssteuerung oder einer Antriebsregelung zu verbessern.

Gemäß der Erfindung wird diese Aufgabe verfahrenstechnisch dadurch gelöst, dass auf den mechanischen Bewegungsablauf im regulären Betrieb bezogene Bild- und/oder Videodaten synchron zum Steuertakt an die Bewegungssteuerung oder die Antriebsregelung geliefert werden, dass die gelieferten Daten in der Bewegungssteuerung oder der Antriebsregelung durch einen Zeitstempel mit in der Bewegungssteuerung oder der Antriebsregelung vorliegenden Daten verknüpft werden und dass die gelieferten Daten zusammen mit den in der Bewegungssteuerung oder der Antriebsregelung vorliegenden Daten in Echtzeit synchronisiert angezeigt oder in Echtzeit synchronisiert verarbeitet werden. Damit können einem Anwender umgehend in Echtzeit synchronisierte Daten zur Verfügung gestellt werden.

Ein erstes vorteilhaftes Verfahren der Erfindung ist dadurch gekennzeichnet, dass die zu synchronisierenden Daten durch einen Anwender ausgewählt werden. Damit ist es nicht notwendig, dauernd sämtliche vorliegenden Daten zu synchronisieren, sondern das Datenaufkommen kann vor oder während des Betriebs der genannten Maschinen vorteilhaft ausgewählt werden. Somit steht es dem Anwender u.a. auch frei, welche Daten er synchronisieren möchte.

Ein weiteres vorteilhaftes Verfahren der Erfindung ist dadurch gekennzeichnet, dass die Bild- und/oder Videodaten vor der Übertragung komprimiert werden. Damit wird das Datenübertragungsaufkommen vorteilhaft reduziert.

Ein weiteres vorteilhaftes Verfahren der Erfindung ist dadurch gekennzeichnet, dass mehrere synchronisierte Datenblöcke in einem Speicher der Bewegungssteuerung oder der Antriebsregelung nach synchronisierter Anzeige oder Verarbeitung zwischengespeichert werden. Somit steht einem Anwender oder einem Weiterverarbeitungsgerät offen, auch bereits zeitlich abgelaufene Vorgänge zu betrachten bzw. zu verarbeiten.

Ein weiteres vorteilhaftes Verfahren der Erfindung ist dadurch gekennzeichnet, dass die synchronisierten Daten auf mindestens einem Web-Server bereitgestellt werden. Somit können vorteilhaft sämtliche mit dem Internet in Verbindung stehenden Technologien eingesetzt werden.

Ein weiteres vorteilhaftes Verfahren der Erfindung ist dadurch gekennzeichnet, dass mehrere synchronisierte Datenblöcke auf mindestens einem Web-Server zwischengespeichert werden. Somit wird einem Anwender ermöglicht, auf einem Web-Server auch bereits zeitlich abgelaufene synchronisierte Datenblöcke abzurufen.

Ein weiteres vorteilhaftes Verfahren der Erfindung ist dadurch gekennzeichnet, dass zusätzlich Daten in die Bewegungssteuerung oder in die Antriebsregelung eingespielt und zu den Bild- und/oder Videodaten oder den internen Daten synchronisiert werden. Damit kann ein Anwender zusätzliche, nicht in der Bewegungssteuerung oder der Antriebsregelung vorliegende Daten einspielen und synchronisieren. Bei diesen Daten kann es sich beispielsweise um Messdaten handeln, die mittels eines Oszillographen aufgenommen werden.

Ein weiteres vorteilhaftes Verfahren der Erfindung ist dadurch gekennzeichnet, dass durch ein Kennsignal eine Synchronisation von Daten gestartet oder beendet wird. Somit werden nicht ständig Daten synchronisiert, sondern nur wenn ein bestimmtes Kennsignal auftritt. Bei dem Kennsignal kann es sich beispielsweise um die Ausgabe einer Komparatorschaltung handeln, die Messwerte mit jeweiligen Ober- oder Unterschranken vergleicht.

Die Aufgabe wird weiterhin einrichtungstechnisch durch eine Einrichtung gelöst, auf der derartige Verfahren ausführbar sind. Damit kann ein Anwender vorgenannte Verfahren auf der Einrichtung nutzen.

Ein Ausführungsbeispiel der Erfindung ist in der Zeichnung dargestellt und wird im folgenden näher erläutert. Dabei zeigen:
- FIG 1: einen symbolhaften Aufbau einer Werkzeugmaschine, einer Produktionsmaschine oder eines Roboters mit der Möglichkeit zur Synchronisation von Daten und
- FIG 2: einen schematischen Aufbau einer Anzeige zur Betrachtung von synchronisierten Daten.

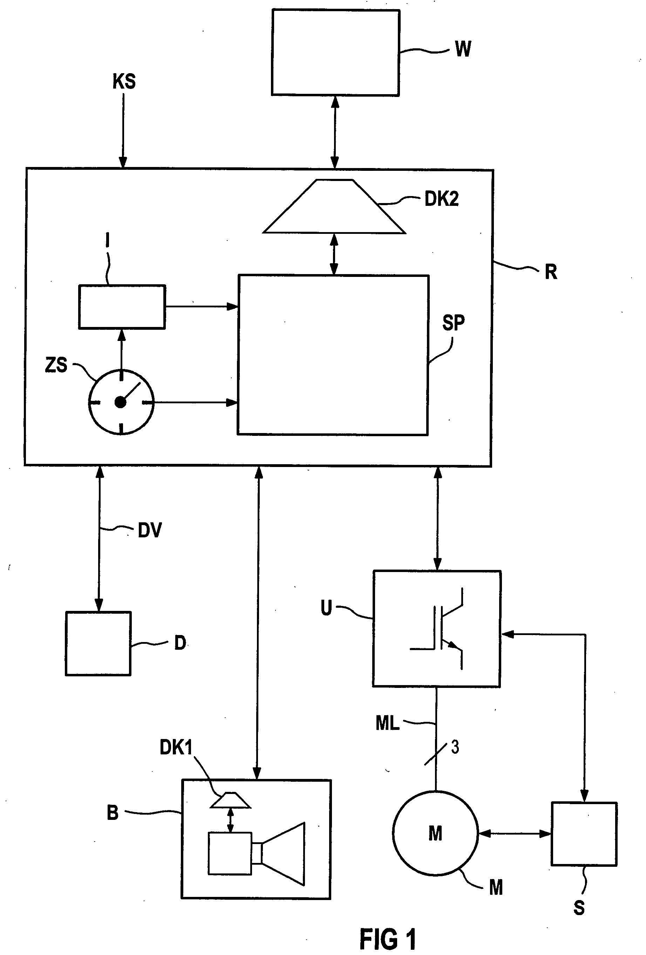

In der Darstellung gemäß FIG 1 ist in einem symbolhaften Aufbau einer Werkzeugmaschine, einer Produktionsmaschine oder eines Roboters die Möglichkeit zur Synchronisation von Daten aufgezeigt. Ein Motor M, der rotatorisch als auch linear ausgebildet sein kann, wird von einem Umrichter U mit der notwendigen elektrischen Energie über eine Motorleitung ML versorgt. Der Umrichter U ist durch ein Schaltsymbol der Leistungselektronik in einem quadratischen Block gekennzeichnet. Von der Motorleitung ML ist nur eine Verbindung eingezeichnet, mit der Kennzeichnung, dass es sich um eine dreiphasige Motorleitung handelt.

Sämtliche weiteren Verbindungen sind durch Pfeil- oder Doppelpfeilverbindungen in der Darstellung eingezeichnet. Hierbei handelt es sich um Datenverbindungen DV, von denen nur eine Doppelpfeilverbindung in der Darstellung bezeichnet ist.

Der Motor M ist mit einem Sensor S verbunden, der beispielsweise eine Motortemperatur erfasst und diese an den Umrichter U übermittelt. Diese, sowie weitere Daten D, werden von dem Umrichter U mittels einer Datenverbindung DV an die Regelung R übermittelt. Dabei ist es auch möglich, dass der Sensor S direkt mit der Regelung R verbunden ist. Die Datenverbindungen DV können beispielsweise aus einem Ethernet-Bussystem bestehen, das eine hohe Übertragungsrate ermöglicht. Hier ist weiter das sogenannte Fast-Ethernet zu nennen, welches hohe Datenübertragungsraten zur Verfügung stellt. Mit der Verwendung von Datenverbindungen DV mit hohen Datenübertragungsraten wird dem Anwender erst ermöglicht, datenintensive Anwendungen zu nutzen. Beispielsweise ist dann mit der Erfindung eine gleichzeitige Bild-, Video- und Audiodatenübertragung möglich. Insbesondere bei Fehlerfällen oder zur Überwachung der technischen Anlagen wird dem Anwender mit der Erfindung ein komfortables Hilfsmittel mit untereinander synchronisierten Daten zur Verfügung gestellt.

An der Werkzeugmaschine, der Produktionsmaschine oder dem Roboter ist eine Bilderfassung installiert, die Bilddaten B des Motors M an die Regelung R übermittelt. Die Bilddaten B sind in der Darstellung durch ein Kamerasymbol in einem rechteckigen Block symbolisiert. Zusätzlich ist in dem Block eine optionale Datenkompression DK1 eingezeichnet, welche mit Hard- oder Softwaremitteln bereitgestellt werden kann. Die Datenkompression DK1, DK2 ist durch ein Trapez dargestellt, welches durch seine unterschiedlich langen parallelen Begrenzungen eine Datenkompression symbolisiert. So ist es möglich, die einzelnen Bilder (Frames) oder Bildsequenzen zu komprimieren und mit einem geringeren Datenvolumen eine Übertragung zu bewerkstelligen.

Die Bilddaten B werden in der Regelung R mit internen Größen I verknüpft. Diese Funktion kann beispielsweise ein Zeitstempel ZS vornehmen, der in der Darstellung durch ein Uhrensymbol eingezeichnet ist. Die Zeitstempelfunktion ZS gewährleistet, dass interne Größen I als auch weitere Daten D, B zeitsynchron sind und legt den genauen Erfassungszeitpunkt fest.

An Stelle von Bilddaten B können auch Video- oder Audiodaten oder sämtliche Daten D gleichzeitig miteinander verknüpft werden. Auch ist denkbar, dass weitere Daten D mit den internen Größen I synchronisiert angezeigt oder in Echtzeit synchronisiert verarbeitet werden. Dabei kann ein Anwender beispielsweise Messgrößen mit Hilfe eines Oszilloskops aufnehmen und diese Daten D mit internen Größen I in der Regelung R verknüpfen und an anderer Stelle anzeigen oder in Echtzeit weiterverarbeiten.

Um die anfallenden Daten D, B, I weiter zu verarbeiten oder zu übertragen, ist in der Regelung R zur optimalen Ressourcennutzung eine Datenkompression DK2 vorgesehen.

Die Daten D, B, I werden in der Darstellung an einen Web-Server W übertragen. Der Übersichtlichkeit halber sind hier angeschlossene Ausgabegeräte nicht dargestellt. In Betracht kämen beispielsweise handelsübliche PCs, Bedien- und Beobachtungseinheiten sowie weitere mögliche Visualisierungs- oder Speichereinheiten (z.B. Drucker, Speichermedien).

Zur Darstellung der Daten D, B, I ist es nicht unbedingt notwendig, diese an einen Web-Server zu übertragen. Diese können auch direkt an der Maschine oder der Regelungseinheit R von Darstellungsgeräten angezeigt werden.

Durch die von der Datenverbindung DV zur Verfügung gestellte hohe Übertragungsmöglichkeit kann eine Regelung R diese nutzen und synchron Daten D, B, I einem Anwender zur Verfügung stellen. Dieser kann beispielsweise eine Ferndiagnose, eine Dokumentation der Anlage oder des Anlagenzustands oder eine Fernbedienung vornehmen. Das System kann auch in sogenannte Electronic Production Services eingebunden sein, bei dem ein Anwender zentrales Wissen oder einen zentralen Service (z.B. Softwarepflege, Datenspeicherung) für seine Anlage nutzen kann.

Bislang konnten innerhalb von Antriebs- und Steuergeräten, sowie zusätzlichen Mess-, Wartungs- und Überwachungsgeräten nur interne Größen I, wie beispielsweise Positionen, Drehzahlen und Ströme aufgezeichnet, ausgewertet und dargestellt werden. Bild- und Geräuschinformationen, z.B. über einen dazugehörigen Maschinenzustand konnten nicht synchron erfasst werden. An Maschinen oder deren Steuerungen vorhandene Kameras hatten bislang keinen funktionalen oder zeitlichen Zusammenhang mit der Echtzeitsteuerung oder -regelung.

Durch die Verwendung von universell verwendbaren, schnellen, isochronen Schnittstellen zum Anschluss von Pheriperiegeräten an Werkzeugmaschinen, Produktionsmaschinen und Roboter können u.a. auch Bildsensoren (digitale Fotokameras und Videokameras) synchron zum Steuertakt digitale Bildinformation an die Steuerung oder Regelung dieser Geräte liefern. Die synchrone Kopplung der verschiedensten Daten und die Weiterleitung zu einer überlagerten Automatisierungsebene erweitert die Nutzungs- und Diagnosemöglichkeit dieser Maschinen wesentlich. Maschinenzustände können visuell in zeitlichem Zusammenhang mit internen Größen I oder anderen Daten D dargestellt werden. Ein Anwender bekommt durch die synchrone Information weitere Auswertemöglichkeiten zur Hand.

In der Darstellung gemäß FIG 1 ist weiterhin ein Kennsignal KS dargestellt, durch das bestimmte Aktionen eingeleitet oder beendet werden können. Das Kennsignal KS kann dabei extern als auch intern in der Regelung R erzeugt werden. Hiermit ist es beispielsweise möglich, eine synchrone Datenübertragung an einen Web-Server zu starten, falls Ober- oder Unterschreitungen von Messdaten oder internen Größen I auftreten.

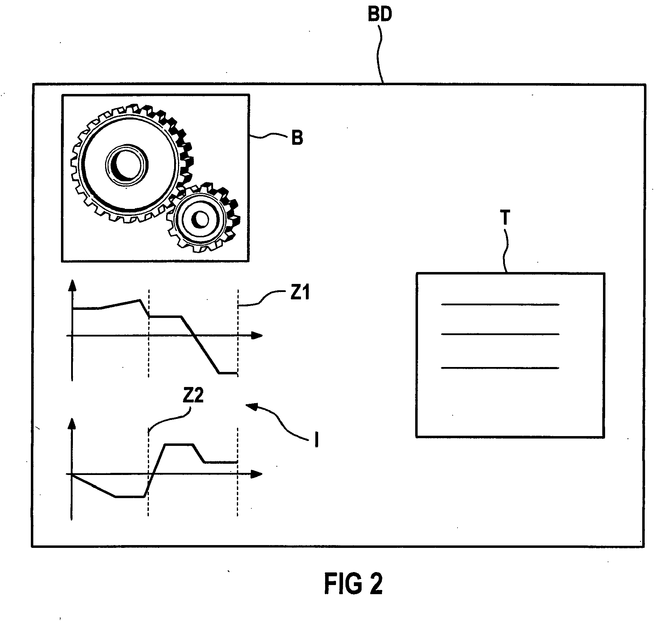

In der Darstellung gemäß FIG 2 ist ein schematischer Aufbau einer Bildschirmdarstellung BD zur Betrachtung synchronisierter Daten D, B, I dargestellt. Ein Anwender kann dabei Bilddaten B synchronisiert mit internen Größen I betrachten. Der Kurvenverlauf zweier interner Größen I ist in der Bildschirmdarstellung BD eingezeichnet. Die mit der jeweiligen Bilddarstellung B synchronisierten Daten D, B, I sind zum eingezeichneten Zeitpunkt Z1 erkennbar. Die jeweiligen Zeitpunkte Z1 und Z2 sind in der Darstellung durch eine über den internen Daten I verlaufende vertikale, gestrichelt eingezeichnete Linie gekennzeichnet.

Es ist denkbar, das ein Anwender beispielsweise bei einem Anlagenstillstand vorhergehende Datenblöcke, die aus zueinander synchronisierten Daten bestehen, abruft und schrittweise durchschauen kann.

Verschiebt ein Anwender den zuletzt dargestellten Zeitpunkt Z1, Z2 auf einen beliebig auswählbaren Zeitpunkt Z1, Z2, der im Zeitintervall der gespeicherten Datenblöcke liegt, so lässt sich eine Reihenfolge von synchronisierten Datenblöcken durchblättern. Der Anwender kann mittels der Erfindung vorteilhaft versuchen, die maßgebliche Ursache des Anlagenstillstands zu ergründen.

Des Weiteren können auf der Bildschirmdarstellung BD weitere Symbole oder numerische Zeichen dargestellt sein, die im Zusammenhang mit der Anlage oder den Bilddaten B oder den internen Größen I stehen. Hierzu ist in der Bildschirmdarstellung BD ein Rechteck mit drei horizontal untereinander verlaufenden Linien eingezeichnet, welches die Darstellung von Textdaten T symbolisiert.

## Patentansprüche

1. Verfahren zur Bereitstellung von Daten von Werkzeugmaschinen, Produktionsmaschinen oder Robotern mit mindestens einer Bewegungssteuerung oder einer Antriebsregelung (R),
- wobei auf einem mechanischen Bewegungsablauf im regulären Betrieb bezogene Bild- und/oder Videodaten (B) synchron zu einem Steuertakt an die Bewegungssteuerung oder die Antriebsregelung (R) angezeigt werden,
- wobei die im regulären Betrieb bezogene Bild- und Videodaten (B) in der Bewegungssteuerung oder der Antriebsregelung (R) durch einen Zeitstempel (ZS) mit in der Bewegungssteuerung oder der Antriebsregelung (R) vorliegenden internen Größen (I) verknüpft werden und
- **dadurch gekennzeichnet, dass** die im regulären Betrieb bezogenen Bild- und Videodaten (B) zusammen mit den in der Bewegungssteuerung oder der Antriebsregelung (R) vorliegenden internen Größen (I) in Echtzeit synchronisiert angezeigt werden.

2. Verfahren nach Anspruch 1, **dadurch gekennzeichnet, dass** die zu synchronisierenden Daten (D, B, I) durch einen Anwender ausgewählt werden.

3. Verfahren nach einem der vorstehenden Ansprüche, **dadurch gekennzeichnet, dass** die Bild- und/oder Videodaten (B) vor der Übertragung komprimiert werden (DK1, DK2).

4. Verfahren nach einem der vorstehenden Ansprüche, **dadurch gekennzeichnet, dass** mehrere synchronisierte Datenblöcke (D,B,I) in einem Speicher (SP) der Bewegungssteuerung oder der Antriebsregelung (R) nach synchronisierter Anzeige oder Verarbeitung zwischengespeichert werden.

5. Verfahren nach einem der vorstehenden Ansprüche, **dadurch gekennzeichnet, dass** die synchronisierten Daten (D,B,I) auf mindestens einem Web-Server (W) bereitgestellt werden.

6. Verfahren nach Anspruch 5, **dadurch gekennzeichnet, dass** mehrere synchronisierte Datenblöcke (D, B, I) auf mindestens einem Web-Server (W) zwischengespeichert werden.

7. Verfahren nach einem der vorstehenden Ansprüche, **dadurch gekennzeichnet, dass** zusätzliche Daten (D) in die Bewegungssteuerung oder in die Antriebsregelung (R) eingespielt und zu den Bild- und/oder Videodaten (B) oder den internen Größen(I) synchronisiert werden.

8. Verfahren nach einem der vorstehenden Ansprüche, **dadurch gekennzeichnet, dass** durch ein Kennsignal (KS) eine Synchronisation von Daten (D, B, I) gestartet oder beendet wird.

9. Einrichtung zur Bereitstellung von Daten von Werkzeugmaschinen, Produktionsmaschinen oder Robotern mit mindestens einer Bewegungssteuerung oder einer Antriebsregelung (R), wobei die Einrichtung die Werkzeugmaschine, die Produktionsmaschine oder den Roboter mit der Bewegungssteuerung oder der Antriebsregelung umfasst, mit Mitteln zur Übertragung, Verarbeitung oder Synchronisierung von Daten,
- wobei auf einen mechanischen Bewegungsablauf im regulären Betrieb bezogene Bild- und/oder Videodaten (B) synchron zu einem Steuertakt an die Bewegungssteuerung oder die Antriebsregelung (R) zur Anzeige vorgesehen sind,
- wobei die im regulären Betrieb bezogene Bild- und Videodaten (B) in der Bewegungssteuerung oder der Antriebsregelung (R) durch einen Zeitstempel (ZS) mit in der Bewegungssteuerung oder der Antriebsregelung (R) vorliegenden internen Größen (I) zur Verknüpfung vorgesehen sind
- **dadurch gekennzeichnet, dass** die im regulären Betrieb bezogene Bild- und Videodaten(B) zusammen mit den in der Bewegungssteuerung oder der Antriebsregelung (R) vorliegenden Größen (I) in Echtzeit synchronisiert zur Anzeige vorgesehen sind.

10. Einrichtung nach Anspruch 9, **dadurch gekennzeichnet, dass** auf der Einrichtung ein Verfahren nach einem der Ansprüche 2 bis 8 ausführbar ist.

## Claims

1. Method for providing data of machine tools, production machines or robots with at least one motion control or a drive control (R),
- wherein image and/or video data (B) relating to a mechanical motion sequence during regular operation is displayed in synchrony with a control pulse on the motion control or the drive control (R),
- wherein the image and video data (B) received during regular operation is linked in the motion control or the drive control (R) by a time stamp (ZS) with internal variables (I) present in the motion control or the drive control (R) and
- **characterised in that** the image and video data (B) received during regular operation is indicated in real-time synchrony together with the internal variables (I) present in the motion control or the drive control (R).

2. Method according to claim 1, **characterised in that** the data (D, B, I) to be synchronized is selected by a user.

3. Method according to one of the preceding claims, **characterised in that** the image and/or video data (B) is compressed (DK1, DK2) prior to the transmission.

4. Method according to one of the preceding claims, **characterised in that** a number of synchronised data blocks (D, B, I) are buffered in a memory (SP) of the motion control or the drive control (R) after synchronised display or processing.

5. Method according to one of the preceding claims, **characterised in that** the synchronised data (D, B, I) is buffered on at least one web server (W).

6. Method according to claim 5, **characterised in that** a number of synchronised data blocks (D, B, I) is buffered on at least one web server (W).

7. Method according to one of the preceding claims, **characterised in that** additional data (D) is brought into the motion control or into the drive control (R) and is synchronised with the image and/or video data (B) or the internal variables (I).

8. Method according to one of the preceding claims, **characterised in that** a synchronisation of data (D, B, I) is started or terminated by means of a code signal (KS).

9. Device for providing data of machine tools, production machines or robots with at least one motion control or a drive control (R), wherein the device comprises the machine tool, the production machine or the robots with the motion control or the drive control, having means for transmitting, processing or synchronising data,
- wherein image and/or video data (B) relating to a mechanical motion sequence during regular operation is displayed in synchrony with a control clock on the motion control or the drive control (R),
- wherein the image and video data (B) in the motion control or the drive control (R) received by a time stamp (ZS) during regular operation is provided for linkage purposes with internal variables (I) present in the motion control or the drive control (R),
- **characterised in that** the image and video data (B) received during regular operation is displayed in real-time synchrony together with the variables (I) present in the motion control or the drive control (R).

10. Device according to claim 9, **characterised in that** a method according to one of claims 2 to 8 can be implemented on the device.

## Revendications

1. Procédé de mise à disposition de données de machines-outils, de machines de production ou de robots, ayant au moins une commande de déplacement ou une régulation (R) d'entraînement,
- dans lequel on affiche des données (B) d'image et/ou vidéo se rapportant à un déroulement de déplacement mécanique en fonctionnement régulier, en synchronisme à une cadence de commande sur la commande de déplacement ou la régulation (R) d'entraînement,
- dans lequel on combine les données (B) d'image et vidéo? se rapportant au fonctionnement régulier dans la commande de déplacement ou la régulation (R) d'entraînement? par un horodatage (ZS) à des grandeurs (I) internes présentes dans la commande de déplacement ou dans la régulation (R) d'entraînement et
- **caractérisé en ce que** l'on affiche, de manière synchronisée en temps réel, les données (B) d'image et vidéo? se rapportant au fonctionnement régulier, ensemble avec les grandeurs (I) internes présentes dans la commande de déplacement ou dans la régulation (R) d'entraînement.

2. Procédé suivant la revendication 1, **caractérisé en ce que** les données (D, B, I) synchronisées sont choisies par un utilisateur.

3. Procédé suivant l'une des revendications précédentes, **caractérisé en ce que** l'on comprime les données (B) d'image et/ou vidéo avant la transmission.

4. Procédé suivant l'une des revendications précédentes, **caractérisé en ce que** l'on met en mémoire tampon plusieurs blocs (D, B, I) de données synchronisées dans une mémoire (SP) de la commande de déplacement ou de la régulation (R) d'entraînement après affichage synchronisé ou traitement.

5. Procédé suivant l'une des revendications précédentes, **caractérisé en ce que** l'on met les données (D, B, I) synchronisées à disposition sur au moins un serveur (W) web.

6. Procédé suivant la revendication 5, **caractérisé en ce que** l'on met en mémoire tampon plusieurs blocs (D, B, I) de données synchronisées sur au moins un serveur (W) web.

7. Procédé suivant l'une des revendications précédentes, **caractérisé en ce que** l'on met en jeu des données (D) supplémentaires dans la commande de déplacement ou dans la régulation (R) d'entraînement et on les synchronise aux données (B) d'image et/ou vidéo ou aux grandeurs (I) internes.

8. Procédé suivant l'une des revendications précédentes, **caractérisé en ce que** l'on fait débuter une synchronisation de données (D, B, I) ou on y met fin par un signal (KS) caractéristique.

9. Dispositif de mise à disposition de données de machines-outils, de machines de production ou de robots, ayant au moins une commande de déplacement ou une régulation (R) d'entraînement, dans lequel le dispositif comprend la machine-outil, la machine de production ou le robot ayant la commande de déplacement ou la régulation d'entraînement avec des moyens de transmission de traitement ou de synchronisation de données,
- dans lequel des données (B) d'image et/ou vidéo, se rapportant au déroulement mécanique du déplacement en fonctionnement régulier, sont prévues pour l'affichage en synchronisme avec une cadence de commande sur la commande de déplacement ou sur la régulation (R) d'entraînement,
- dans lequel les données (B) d'image et vidéo, se rapportant au fonctionnement régulier, sont prévues pour être combinées dans la commande de déplacement ou dans la régulation (R) d'entraînement par un horodatage (ZS) à des grandeurs (I) internes présentes dans la commande de déplacement ou dans la régulation (R) d'entraînement,
- **caractérisé en ce que** les données (B) d'image et vidéo se rapportant au fonctionnement régulier sont prévues pour être affichées de manière synchronisée en temps réel avec les grandeurs (I) présentes dans la commande de déplacement ou dans la régulation (R) d'entraînement.

10. Dispositif suivant la revendication 9, **caractérisé en ce qu'**un procédé suivant l'une des revendications 2 à 8 peut être exécuté sur le dispositif.
